# FASCICULE DE BREVET EUROPEEN

(11) **EP 3 489 504 B1**
(45) Date de publication et mention de la délivrance du brevet: **13.01.2021**
(21) Numéro de dépôt: 18205806.5
(22) Date de dépôt: 13.11.2018
(51) Int. Cl.: F02M 37/22, F02M 37/24, B01D 36/00

(54) **ENSEMBLE POUR FILTRATION DU CARBURANT D'UN VÉHICULE AUTOMOBILE AVEC SYSTÈME DE PURGE**
KRAFTSTOFFFILTERUNG EINES KRAFTFAHRZEUGS MIT REINIGUNGSSYSTEM
ASSEMBLY FOR FILTERING FUEL OF A MOTOR VEHICLE WITH PURGE SYSTEM

(30) Priorité: 27.11.2017 FR 1761206
(43) Date de publication de la demande: 29.05.2019
(73) Titulaire: PSA Automobiles SA, 78300 Poissy (FR)
(72) Inventeur: BERTH, Stéphane, 92320 Chatillon (FR)

(56) Documents cités:
- WO-A1-2016/164907
- WO-A1-2016/181047
- DE-A1-102010 043 218

## Description

La présente invention concerne un ensemble pour filtration du carburant d'un véhicule automobile comprenant un système de purge, ainsi qu'un véhicule automobile équipé d'un tel ensemble pour filtration.

Les véhicules automobiles utilisant un carburant comporte généralement un filtre à carburant disposé en sortie du réservoir. En particulier pour le gasoil, il est nécessaire d'utiliser un filtre à carburant présentant un volume assez important, permettant une décantation de l'eau pouvant se trouver dans le carburant afin de l'éliminer lors d'une purge.

Un type de dispositif de purge pour un boîtier de filtre à carburant, présenté notamment par le document WO-A1-2008093295, comporte une vis longue traversant un volume contenant le carburant, présentant du côté de la tête un filetage de vissage dans une paroi de ce volume, et une extrémité opposée obstruant un orifice de sortie d'eau de purge quand cette vis est vissée.

De cette manière on obtient une sortie d'eau de purge par l'orifice qui est éloigné de la tête de la vis de purge, ce qui facilite la manœuvre de cette tête et la récupération de l'eau.

En particulier le filtre à carburant peut être disposé à côté du réservoir de carburant, sous le véhicule. Dans ce cas pour certains véhicules on dispose sous le filtre un déflecteur de protection formé par une tôle, présentant un perçage aligné en dessous de l'orifice de purge de ce filtre afin de laisser passer l'eau de purge en l'écoulant en dessous du véhicule lors d'une purge.

Toutefois dans le cas d'une simple tôle de déflecteur présentant une surface sensiblement horizontale avec un perçage disposé verticalement en dessous de l'orifice de purge, on peut obtenir un écoulement de l'eau légèrement dévié lorsqu'elle sort de l'orifice du filtre. On a alors un jet d'eau qui vient au moins en partie sur la tôle autour du perçage, donnant un écoulement sur le dessus du déflecteur.

On ne peut alors pas récupérer proprement l'eau de purge en dessous du perçage du déflecteur, ce qui pose des problèmes en particulier en fin de purge, quand du gasoil coule aussi qu'il faut récupérer pour éviter des pollutions.

Le document DE 10 2010 043218 divulgue un ensemble pour filtration du carburant d'un véhicule automobile selon le préambule de la revendication 1.

La présente invention a notamment pour but d'éviter ces inconvénients de la technique antérieure.

Elle propose à cet effet un ensemble pour filtration selon la revendication 1.

Un avantage de cet ensemble pour filtration est que le contour fermé constitue un réceptacle plus large que le perçage, permettant de recevoir de manière sécurisée à l'intérieur un écoulement de fluide venant du dessus, présentant des petites déviations. Le fluide dans le réceptacle s'écoule ensuite au travers du perçage du déflecteur, ce qui permet de le récupérer facilement et complètement sous le véhicule en dessous de ce perçage.

L'ensemble pour filtration suivant l'invention peut de plus comporter une ou plusieurs des caractéristiques suivantes, qui peuvent être combinées entre elles.

Avantageusement, le déflecteur et les parois sont formés par un moulage en une seule pièce d'une matière plastique.

Dans ce cas, la face supérieure du déflecteur peut comporter une nervure courbée entourant le perçage, dont les extrémités rejoignent un côté d'une nervure longitudinale pour former le contour fermé.

Avantageusement, les parois du contour fermé présentent une hauteur supérieure à 10mm.

Avantageusement, la plus grande largeur intérieure du contour fermé présente une dimension comprise entre 15 et 45mm.

Dans ce cas, de plus la distance horizontale minimum entre un bord du perçage et les parois du contour fermé est avantageusement supérieure à 5mm.

L'invention a aussi pour objet un véhicule automobile équipé d'un filtre à carburant, comportant un ensemble pour filtration comprenant l'une quelconque des caractéristiques précédentes.

En particulier, le dessous du déflecteur peut être disposé au niveau de la base d'un réservoir de carburant de ce véhicule.

Avantageusement, le déflecteur comporte un bord remontant disposé sur le côté du véhicule, qui couvre latéralement au moins en partie le filtre à carburant.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant un mode de réalisation de l'invention, et dans lesquels :
- la figure 1 est une vue de dessous d'un plancher d'un véhicule comportant un ensemble pour filtration selon l'art antérieur ;
- la figure 2 est une vue de détail du filtre et du déflecteur de cet ensemble selon l'art antérieur, qui sont écartés l'un de l'autre ;
- la figure 3 et 4 sont des vues de dessus respectivement d'ensemble et de détail de ce déflecteur selon l'art antérieur ; et
- les figures 5 et 6 sont des vues de dessus respectivement d'ensemble et de détail, d'un déflecteur pour un ensemble de filtration selon l'invention.

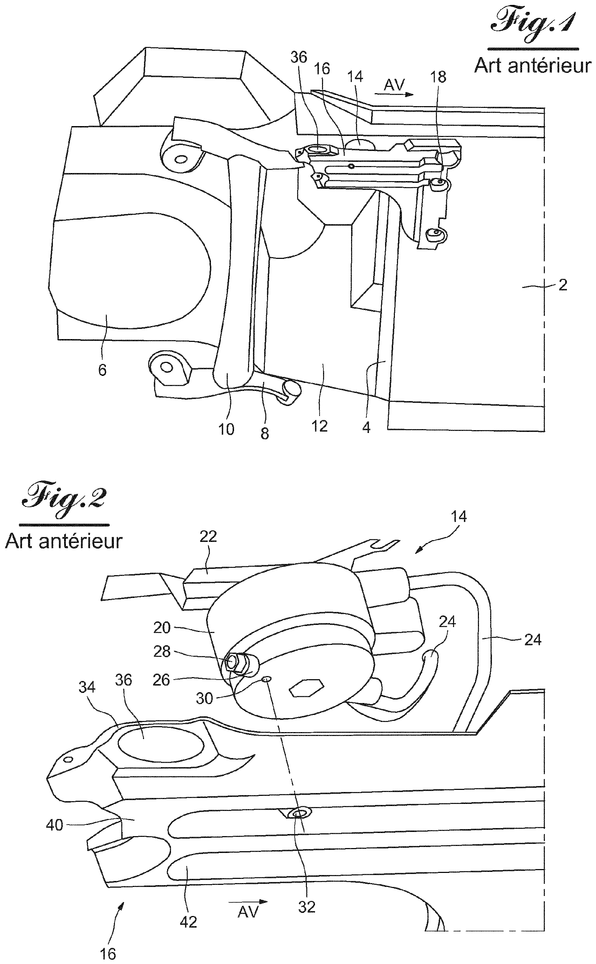

La figure 1 présente un plancher de véhicule comportant une partie avant 2 sensiblement plate, tournée vers l'avant du véhicule indiqué par la flèche AV, recevant vers l'arrière les pieds des passagers arrières. Un plancher de coffre 6 disposé un peu plus haut, rejoint le plancher avant avec une partie verticale 4 établissant la jonction.

Un train arrière comporte deux bras longitudinaux 8 présentant chacun une extrémité avant fixée par un pivot à la caisse du véhicule, et une traverse flexible 10 soudée au milieu de ces bras pour les relier entre eux.

Un réservoir de carburant 12 contenant du gasoil, présente une forme sensiblement plate remplissant l'espace entre la partie verticale 4 du plancher et la traverse 10 du train arrière, pour comporter un grand volume de réserve. Un filtre à carburant 14 est fixé sur la caisse du véhicule, à droite du réservoir 12.

Un déflecteur 16 forme une plaque présentant un dessous horizontal sensiblement plat venant au niveau de la base du réservoir 12, comportant un côté droit aligné sur le côté de la caisse du véhicule, et un côté gauche très large à l'avant, et étroit à l'arrière pour venir à côté de ce réservoir, sous le filtre 14 afin de le protéger.

Le déflecteur 16 est fixé à l'avant par deux vis écartées 18 et à l'arrière par deux vis rapprochées, qui sont introduites dans des perçages de ce déflecteur pour être vissées sous la caisse du véhicule.

Les figures 2, 3 et 4 présentent un boîtier 20 du filtre à carburant 14 comportant une forme cylindrique disposée suivant un axe vertical, comprenant un dessous plat disposé horizontalement, et sur le dessus un support 22 formé par une tôle métallique qui est fixée sous la caisse du véhicule.

Le boîtier 20 comporte sur un côté une entrée et une sortie de carburant, recevant des canalisations 24 de liaison avec le réservoir ou le moteur thermique du véhicule.

Le boîtier 20 comporte à sa base un téton cylindrique 26 disposé suivant un axe horizontal, présentant un côté ajusté sur la base de ce boîtier pour rester dans le même plan. L'extrémité du téton 26 reçoit la tête d'une vis de purge 28, permettant d'ouvrir ou de fermer un orifice de sortie 30 disposé sur la base du boîtier 20, au niveau du raccordement avec ce téton.

Le déflecteur 16 comporte sur le côté du véhicule un bord remontant 34 protégeant le côté du filtre à carburant 14, présentant une ouverture allongée horizontalement 36 disposée en face de la vis de purge 28 pour permettre son accès avec un outil sans démonter ce déflecteur.

Un perçage de vidange 32 formé sur la partie horizontale du déflecteur 16, est aligné à la verticale sous l'orifice de sortie 30 afin de permettre un écoulement d'eau et éventuellement de gasoil lors d'une ouverture de la vis de purge 28.

La partie horizontale du déflecteur 16 comporte une partie plate 40 comprenant deux bossages allongés parallèles 42 disposés dans la direction longitudinale du véhicule, formant transversalement une petite courbure bombée tournée vers le haut.

Le perçage de vidange 32 est entouré par une petite couronne plate horizontale 44 disposée au niveau de la partie plate 40 du déflecteur 16, qui est formée au bord de cette partie plate dans un bossage 42. Le contour de la couronne plate 44 rejoint le bossage 42 par un entourage vertical, qui s'abaisse vers le côté extérieur du véhicule pour rejoindre la partie plate 40. De cette manière la cuvette contenant le perçage de vidange 32 est complètement ouverte sur un côté.

Avantageusement le déflecteur 16 est formé par un moulage en matière plastique, pouvant comporter des renforts de fibres, ce qui permet de réaliser en une seule opération de moulage le déflecteur fini comprenant ses perçages.

Un jet de liquide sortant de l'orifice 30 du filtre à carburant 14, s'écoulant pas tout à fait verticalement en dessous par un effet de mouillage des bords de cet orifice, rejette une partie du liquide autour du perçage de vidange 32, dans la cuvette entourant ce perçage, puis s'écoule ensuite suivant la flèche F par un effet de débordement, vers la partie plate 40 en la souillant.

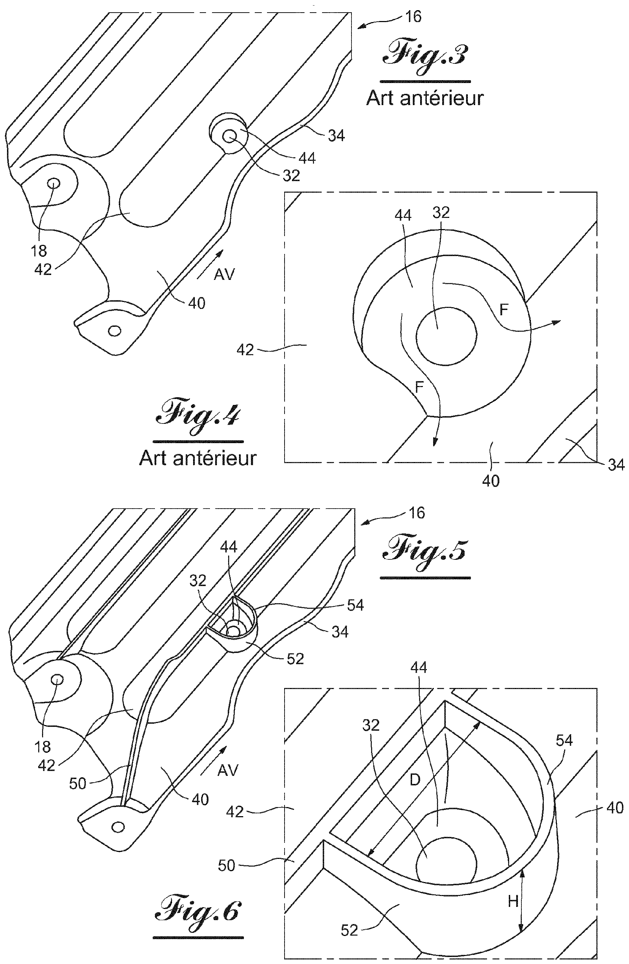

Les figures 5 et 6 présentent un déflecteur 16 comportant sur sa face supérieure des nervures verticales 50, 52 formées d'une seule pièce avec ce déflecteur par un moulage d'une matière plastique.

Une nervure longitudinale 50 réalisée au sommet de chaque bossage 42, court le long du déflecteur 16 jusqu'à ses extrémités ce qui renforce sensiblement ce déflecteur en lui donnant une rigidité. Une nervure courbée 52 présentant une courbure sur 180° centrée sur le perçage 32, comporte ses extrémités qui rejoignent la nervure longitudinale 50. On réalise de cette manière des parois verticales formant un contour fermé 54 autour du perçage 32.

La plus grande largeur intérieure D du contour fermé 54 est comprise entre 15 et 45mm, avantageusement elle est comprise entre 25 et 35mm. La distance horizontale minimum entre un bord du perçage 32 et les parois du contour fermé 54 est supérieure à 5mm, avantageusement comprise entre 5 et 10mm, en formant une surface de ce contour fermé suffisante pour recevoir un jet de liquide légèrement dévié venant de l'orifice de sortie 30 du filtre à carburant 14.

La hauteur H de la nervure courbée 52 est comprise entre 10 et 30mm, avantageusement entre 15 et 25mm, en formant un volume suffisant à l'intérieur du contour fermé 54 pour recevoir une quantité de liquide qui ne déborde pas avant de s'écouler par le perçage 32.

On réalise de manière simple et économique, sans modification notable du prix de revient en intégrant les nervures 50, 52 dans le moulage d'une matière plastique, à la fois une rigidification du déflecteur 16, et une récupération efficace de tous les fluides s'écoulant du filtre à carburant 14, en évitant de souiller la face supérieure du déflecteur 16, et de polluer par des écoulements non récupérés.

## Revendications

1. Ensemble pour filtration du carburant d'un véhicule automobile, comportant un filtre à carburant (14) équipé d'un système de purge (28) ouvrant un orifice de sortie (30) dirigé vers le bas, et un déflecteur de protection (16) comprenant une forme plate horizontale disposée en dessous du filtre (14), présentant un perçage (32) aligné verticalement sous l'orifice de sortie (30), la face supérieure du déflecteur (16) comportant des parois formant un contour fermé (54) autour du perçage, **caractérisé en ce que** la face supérieure du déflecteur (16) comporte des nervures (50) disposées dans la direction longitudinale du véhicule et une nervure courbée (52) qui entoure le perçage (32) et dont les extrémités rejoignent un côté d'une nervure longitudinale (50) pour former le contour fermé (54).

2. Ensemble pour filtration selon la revendication 1, **caractérisé en ce que** le déflecteur (16) et les parois (54) sont formés par un moulage en une seule pièce d'une matière plastique.

3. Ensemble pour filtration selon l'une quelconque des revendications précédentes, **caractérisé en ce que** les parois du contour fermé (54) présentent une hauteur (H) supérieure à 10mm.

4. Ensemble pour filtration selon l'une quelconque des revendications précédentes, **caractérisé en ce que** la plus grande largeur intérieure (D) du contour fermé (54) présente une dimension comprise entre 15 et 45mm.

5. Ensemble pour filtration selon la revendication 4, **caractérisé en ce que** la distance horizontale minimum entre un bord du perçage (32) et les parois du contour fermé (54) est supérieure à 5mm.

6. Véhicule automobile équipé d'un filtre à carburant, **caractérisé en ce qu'**il comporte un ensemble pour filtration selon l'une quelconque des revendications précédentes.

7. Véhicule automobile selon la revendication 6, **caractérisé en ce que** le dessous du déflecteur (16) est disposé au niveau de la base d'un réservoir de carburant (12) de ce véhicule.

8. Véhicule automobile selon la revendication 6 ou 7, **caractérisé en ce que** le déflecteur (16) comporte un bord remontant disposé sur le côté du véhicule (34), qui couvre latéralement au moins en partie le filtre à carburant (14).

## Patentansprüche

1. Anordnung zum Filtern des Kraftstoffs von einem Kraftfahrzeuge , mit einem Kraftstofffilter (14), ausgestattet mit einem Entlüftungssystem (28) einen Auslassanschluss (30) nach unten gerichtet ist, und eine schützende Ablenker (16) Öffnung ein , umfassend geformten flachen
horizontalen angeordneten einen unter dem Filter (14) mit einer Bohrung (32) vertikal unterhalb der Austrittsöffnung ausgerichtet ist (30), um das Gesicht Superi EURE den Deflektor (16) mit Wänden , die eine geschlossene Kontur bilden , (54) um die Bohrung herum **dadurch gekennzeichnet, dass** die Oberseite des Deflektors (16) Rippen (50) aufweist, die in Längsrichtung des Fahrzeugs angeordnet sind, und eine gekrümmte Rippe (52), die die Bohrung (32) umgibt und deren Enden auf eine Seite treffen eine Längsrippe (50) zur Bildung der geschlossenen Kontur (54).

2. Filtrationsanordnung nach Anspruch 1, **dadurch gekennzeichnet, dass** der Deflektor (16) und die Wände (54) durch Formen in einem einzigen Stück Kunststoff ausgebildet sind.

3. Filtrationsanordnung nach einem der vorhergehenden Ansprüche, **dadurch gekennzeichnet, dass** die Wände der geschlossenen Kontur (54) eine Höhe (H) von mehr als 10 mm aufweisen.

4. Filtrationsanordnung nach einem der vorhergehenden Ansprüchen, **dadurch gekennzeichnet, daß** die größte innere Weite (D) der geschlossenen Kontur (54) aufweist mit einer Abmessung zwischen 15 und 45 mm.

5. Filtrationsanordnung nach Anspruch 4, **dadurch gekennzeichnet, dass** der minimale horizontale Abstand zwischen einer Kante der Bohrung (32) und den Wänden der geschlossenen Kontur (54) größer als 5 mm ist.

6. Kraftfahrzeug, das mit einem Kraftstofffilter ausgestattet ist, **dadurch gekennzeichnet, dass** es eine Filtrationsanordnung nach einem der vorhergehenden Ansprüche umfasst.

7. Kraftfahrzeug nach Anspruch 6, **dadurch gekennzeichnet, dass** die Unterseite des Abweisers (16) auf Höhe des Bodens eines Kraftstofftanks (12) dieses Fahrzeugs angeordnet ist.

8. Kraftfahrzeug nach Anspruch 6 oder 7, **dadurch gekennzeichnet, dass** der Deflektor (16) eine an der Seite des Fahrzeugs (34) angeordnete ansteigende Flanke aufweist, die den Kraftstofffilter (14) seitlich zumindest teilweise abdeckt.

## Claims

1. Assembly for filtering the fuel of a motor vehicle, comprising a fuel filter (14) equipped with a purge system (28) opening an outlet port (30) directed downwards, and a protective deflector (16) comprising a shaped flat horizontal disposed an below the filter (14) having a bore (32) vertically aligned below the outlet orifice (30), the face superi eure the deflector (16) having walls forming a closed contour (54)around the bore, **characterized in that** the upper face of the deflector (16) comprises ribs (50) disposed in the longitudinal direction of the vehicle and a curved rib (52) which surrounds the bore (32) and whose ends meet one side a longitudinal rib (50) to form the closed contour (54).

2. Filtration assembly according to claim 1, **characterized in that** the deflector (16) and the walls (54) are formed by molding in a single piece of plastic.

3. Filtration assembly according to any one of the preceding claims, **characterized in that** the walls of the closed contour (54) have a height (H) greater than 10mm.

4. Filtration assembly according to any one of the preceding claims, **characterized in that** the greatest internal width (D) of the closed contour (54) has a dimension between 15 and 45mm.

5. Filtration assembly according to Claim 4, **characterized in that** the minimum horizontal distance between an edge of the bore (32) and the walls of the closed contour (54) is greater than 5mm.

6. Motor vehicle equipped with a fuel filter, **characterized in that** it comprises a filtration assembly according to any one of the preceding claims.

7. Motor vehicle according to Claim 6, **characterized in that** the underside of the deflector (16) is arranged at the level of the base of a fuel tank (12) of this vehicle.

8. Motor vehicle according to Claim 6 or 7, **characterized in that** the deflector (16) has a rising edge arranged on the side of the vehicle (34),
which laterally covers at least partly the fuel filter (14).
